# EUROPÄISCHE PATENTSCHRIFT

(11) **EP 2 803 071 B1**
(45) Veröffentlichungstag und Bekanntmachung des Hinweises auf die Patenterteilung: **19.08.2015**
(21) Anmeldenummer: 12783145.1
(22) Anmeldetag: 12.10.2012
(51) Int. Cl.: G21C 7/12, G21C 17/10, G01D 5/20, G21C 9/02

(54) **VORRICHTUNG ZUR MESSUNG DER POSITION EINES VERSCHIEBBAREN STEUERSTABES IN EINEM KERNREAKTOR**
DEVICE FOR MEASURING THE POSITION OF A MOVABLE CONTROL ROD IN A NUCLEAR REACTOR
DISPOSITIF DE MESURE DE LA POSITION D'UNE BARRE DE COMMANDE DÉPLAÇABLE DANS UN RÉACTEUR NUCLÉAIRE

(30) Priorität: 13.01.2012 DE 102012000529
(43) Veröffentlichungstag der Anmeldung: 19.11.2014
(73) Patentinhaber: AREVA GmbH, 91052 Erlangen (DE)
(72) Erfinder: HAWRANECK, Matthias, 81541 München (DE)
(74) Vertreter: Kugler, Jörg
(86) Internationale Anmeldenummer: PCT/EP2012/070347
(87) Internationale Veröffentlichungsnummer: WO 2013/104441

(56) Entgegenhaltungen:
- EP-A1- 0 308 282
- DE-A1-102008 058 363
- FR-A5- 2 169 437

## Beschreibung

Die Erfindung bezieht sich auf eine Messvorrichtung zur Positionsmessung eines verschiebbaren Steuerstabes in einem Kernreaktor mit den Merkmalen des Oberbegriffes von Anspruch 1.

Eine derartige Messvorrichtung ist aus der DE 10 2008 058 363 A1 bekannt.

Des Weiteren sind aus EP 0 308 282 A1 und FR 2 169 437 A5 Messvorrichtungen mit hintereinander angeordneten Spulen zur Positionsbestimmung eines Steuerstabes bekannt.

In einem Kernreaktor dient ein Steuerstab - auch Regel- oder Kontrollstab genannt - der Regelung und Abschaltung eines Kernreaktors. Der Steuerstab absorbiert wenn er sich im Reaktorkern befindet, durch die Kernreaktion freigesetzte Neutronen, welche dann nicht mehr für weitere Kernspaltungsprozesse zur Verfügung stehen. Auf diese Weise wird die Reaktionsrate verringert. Neben anderweitigen Möglichkeiten kann somit durch das mehr oder weniger tiefe Hineinfahren der Steuerstäbe in den Reaktorkern der Neutronenfluss und damit die Leistung reguliert werden. Grundsätzlich bedeutet ein tieferes Einfahren der Steuerstäbe eine höhere Neutronenabsorption und somit eine Leistungsabsenkung. Durch das vollständige Einfahren der Steuerstäbe kann die Kettenreaktion völlig unterbunden werden, so dass der Reaktor abgeschaltet wird.

Die exakte Kenntnis über die Stellung der einzelnen Steuerstäbe in einem Reaktorkern ist somit eine wichtige Information. Einerseits dient diese der Leistungssteuerung und andererseits besitzt diese eine hohe Sicherheitsrelevanz. Bei vielen Kernreaktoren, insbesondere bei Druckwasserreaktoren, ist zur Positionsbestimmung der Steuerstäbe ein induktives Messsystem vorgesehen. Dieses sieht für jeden zu überwachenden Steuerstab zumindest eine entlang dessen Stellweges angeordnete Sekundärspule vor, die durch mindestens eine durch Wechselspannung versorgte und somit einen magnetischen Wechselfluss erzeugende Primärspule induktiv erregt wird und deren Sekundärspannungssignal bzw. deren Sekundärspannungssignale abgreifbar sind. In der Regel weist jeder Steuerstab einen induktionsbeeinflussenden, insbesondere den magnetischen Fluss verändernden Kern oder Bereich auf, welcher zum Beispiel ein ferromagnetischer Eisenkern sein kann, so dass sich in Abhängigkeit von der Steuerstabsposition eine Änderung der Permeabilität ergibt und sich somit das Spannungssignal an der oder den Sekundärspulen ändert. Oftmals ist der jeweilige induktionsbeeinflussende Bereich durchgehend und reicht über die Gesamtlänge des Steuerstabes. Auch denkbar ist aber ein induktionsbeeinflussender Bereich mit kürzerer Länge. Bei einem Entlangfahren des Steuerstabes an einer Sekundärspule oder durch diese hindurch verändert sich die Induktivität dieser Spule. Eine Sekundärspule, die sich im Wirkungsbereich des jeweiligen induktionsbeeinflussenden Bereichs befindet, besitzt eine größere Induktivität als zuvor. Das an dieser Sekundärspule abgegriffene Spannungssignal und dessen Amplitude weisen somit eine Abhängigkeit von der Position des induktionsbeeinflussenden Bereichs und somit von der Steuerstabsposition auf.

Durch die Messung eines bzw. aller Sekundärspannungssignale ist eine Positionsbestimmung des Steuerstabes möglich. Wird lediglich eine Sekundärspule für jeden Steuerstab genutzt, ändert sich die Amplitude dieses Sekundärspannungssignals bei Entlangfahren des Steuerstabs an der Sekundärspule. Messtechnisch ergibt sich aus der Höhe der Amplitude die Position des Steuerstabes. Falls mehrere Sekundärspulen zur Positionsbestimmung eines Steuerstabes genutzt werden, die entlang des Verschiebeweges hintereinander angeordnet sind, kann die Positionsbestimmung des Steuerstabes durch Messung und Vergleich aller Sekundärspulenspannungssignale vorgenommen werden. Unabhängig von der Genauigkeit bzw. Ortsauflösung der Positionsbestimmung ist ein Wegfall dieser Information prinzipiell unerwünscht und stellt ein sicherheitstechnisches Risiko dar.

Werden zur Positionsbestimmung eines Steuerstabes eine Primärspule und eine Sekundärspule verwendet, so bedeutet bereits ein Ausfall der elektrischen Leitung, welche die Primärspule mit elektrischer Wechselspannung versorgt, oder ein Ausfall der Messleitung, welche der Sekundärspule zugehörig ist, einen Totalausfall der Positionsbestimmung. Die genaue Information über die Position der Steuerstäbe ist aber insbesondere bei Havarien notwendig, um Sofortmaßnahmen zur Verhinderung von Kernschmelzen einzuleiten. Bei einem Normalbetrieb des Reaktors ist ein Verlust dieser Information ebenfalls mit enormen Nachteilen behaftet, da die Leistungssteuerung über die Position des Steuerstabs geregelt wird. Insbesondere die in vielen Kernkraftwerken geforderte Redundanz einzelner Elemente ist in den bisherigen Vorrichtungen zur Bestimmung der Steuerstabsposition nicht bzw. nur rudimentär vorgesehen.

Der Erfindung liegt daher die Aufgabe zugrunde, eine Messvorrichtung zur Positionsbestimmung eines Steuerstabes der oben genannten Art anzugeben, welche einerseits eine ähnliche Genauigkeit wie herkömmliche Systeme aufweist und welche andererseits den Ausfall einzelner Komponenten, die der Primärspule bzw. der Sekundärspule zugeordnet sind, kompensiert und gleichzeitig in bestehende und bewährte Bauteile von Kernkraftwerken implementiert werden kann.

Diese Aufgabe wird erfindungsgemäß gelöst durch eine Messvorrichtung mit den Merkmalen des Anspruchs 1.

Vorteilhafte Ausgestaltungen der Erfindung sind Gegenstand der Unteransprüche.

Die Erfindung geht von der Überlegung aus, dass ein Ausfall einzelner Primär- bzw. Sekundärspulen durch die Nutzung von weiteren Primär- und Sekundärspulen kompensiert werden kann, so dass einerseits auf redundante Weise ein magnetisches Wechselfeld erzeugt wird und andererseits redundant bzw. mehrfach die Steuerstabsposition durch die Sekundärspulen gemessen wird. Durch das Zusammenfügen von Primär- bzw. Sekundärspulen zu Primär- bzw. Sekundärspuleneinheiten, die in Richtung des Verschiebewegs im Wesentlichen jeweils den gleichen Spulenanfang und das gleiche Spulenende aufweisen, kann der Ausfall einer Primärspule oder einer Sekundärspule durch die anderen vorhandenen Spulen kompensiert werden. Fällt beispielsweise eine Primärspule aus, so erzeugt die Wechselspannung in den noch funktionsfähigen Primärspulen weiterhin ein Magnetfeld, welches in Abhängigkeit von der Steuerstabsposition ein Wechselspannungssignal an den Sekundärspulen induziert, woraus eine Position des Steuerstabes bestimmt werden kann. Fällt eine Sekundärspule einer Sekundärspuleneinheit aus, so wird an den weiterhin funktionsfähigen Sekundärspulen immer noch ein jeweiliges Wechselspannungssignal erzeugt und abgegriffen, welches weiterhin zur Positionsbestimmung genutzt werden kann. Durch die Nutzung von mehr als einer Primärspule, die zu einer Primärspuleneinheit gehört, bzw. von mehr als einer Sekundärspule, die zu einer Sekundärspuleneinheit gehört, wird somit eine vollständige Redundanz der Positionsbestimmung ermöglicht.

Wünschenswerterweise liegt an jeder Primärspule einer Primärspuleneinheit ein gleichartiges Wechselspannungssignal an, um ein im Wesentlichen gleichartiges Magnetfeld zu erzeugen. Um dies zu erreichen, bietet es sich in vorteilhafter Ausgestaltung daher an, dass die Primärspulen im Wesentlichen die gleiche Zahl an Wicklungen aufweisen. So bestehen im Hause der Anmelderin gebräuchliche Primärspulen, die den gesamten Steuerstabsbereich abdecken, aus ca. 24.000 Wicklungen. Teilt man diese Windungszahl auf zwei Primärspulen auf, so dass jede Primärspule aus ca. 12.000 Wicklungen besteht, wird einerseits eine erste Redundanz hinsichtlich der Magnetfelderzeugung erreicht und andererseits der Platzbedarf, den diese Primärspulen benötigen, nicht wesentlich erhöht.

Vorteilhafterweise weisen die Sekundärspulen einer Sekundärspuleneinheit im Wesentlichen die gleiche Zahl an Wicklungen auf. Dies geht einher damit, dass das Wechselspannungssignal, welches von den Primärspulen induziert wird, an jeder Sekundärspule im Wesentlichen gleich sein sollte. Fällt nun eine Sekundärspule aus, so liefern die weiterhin funktionsfähigen Sekundärspulen dieser Sekundärspuleneinheit weiterhin jeweils ein gleichartiges Wechselspannungssignal, welches zur Positionsbestimmung geeignet ist. Somit kann auch bei Ausfall einer Sekundärspule einer Sekundärspuleneinheit weiterhin die Position des Steuerstabes genau ermittelt werden, da an jeder funktionsfähigen Sekundärspule ein möglichst ähnliches Signal vorliegt.

Vorteilhafterweise weisen alle Primärspulen einer Primärspuleneinheit im Wesentlichen die gleiche Zahl an Windungen auf. Da die Windungszahl die Längsausdehnung einer Spule beeinflusst, ergibt sich bei geschickter Bauweise, dass die Primärspulen im Wesentlichen in Verschiebewegsrichtung des Steuerstabes die gleiche Längenausdehnung besitzen, so dass der Platzbedarf im Wesentlichen der gleiche bleiben kann. Wünschenswerterweise gilt dies ebenfalls für die Sekundärspulen einer Sekundärspuleneinheit.

Vorteilhafterweise sind alle Primärspulen und/oder Sekundärspulen einer Spuleneinheit einlagig gewickelt, so dass die Querausdehnung der Spulen gering ist. Eine einlagige Wicklung der Primärspulen bewirkt zudem, dass das induzierte Magnetfeld sich in Abhängigkeit von der Verschiebung des Steuerstabes im Wesentlichen gleichmäßig verändert. Prinzipiell unerwünschte, sprunghafte Änderungen sind somit nicht zu erwarten. Die einlagige Wicklung an den Sekundärspulen bewirkt außerdem, dass sich das induzierte Wechselspannungssignal an jeder Sekundärspule in Abhängigkeit des Steuerstabs im Wesentlichen gleichmäßig ändert, wodurch grundsätzlich unerwünschte Sprünge des induzierten Wechselspannungssignals vermieden werden können.

Wünschenswerterweise sind die einzelnen Wicklungen der Spulen gleichmäßig verteilt, so dass einerseits jede Primärspule einer Primärspuleneinheit im Wesentlichen an jeder Stelle das gleiche Magnetfeld erzeugt. Andererseits ist es günstig, dass beim Durchfahren des Steuerstabs an jeder Sekundärspule der gleiche Spannungsabfall bewirkt wird. Hierzu bietet es sich an die Spulen möglichst gleichartig zu gestalten. Neben einer Gleichheit des Materials sollten daher die Spulen in geometrischer und elektrischer Hinsicht möglichst gleichartig aufgebaut sein. Um dies zu erreichen, können die Primärspulen zumindest einer Primärspuleneinheit um einen Spulenkörper gewickelt werden. Auch denkbar ist es auf einen Spulenkörper zu verzichten und die Spuleneinheit als Luftspuleneinheit auszulegen, so dass sämtliche Primärspulen dieser Spuleneinheit gemeinsam gewickelt sind. Neben der gleichartigen Erzeugung des Magnetfelds durch die Primärspulen, welches ein Wechselspannungssignal an den Sekundärspulen in Abhängigkeit von der Steuerstabsposition induziert, kann ebenfalls durch gemeinsame Wicklung um einen Spulenkörper das Sekundärspannungssignal redundant erzeugt werden. Ebenfalls denkbar ist es daher auch, die Sekundärspuleneinheit, die aus zumindest einer Sekundärspule besteht, als Luftspule zu konstruieren.

Wünschenswerterweise erzeugen alle Primärspulen einer Primärspuleneinheit im Wesentlichen das gleiche Magnetfeld entlang des Verschiebewegs. Sind die Primärspulen einer Primärspuleneinheit gemeinsam um einen Spulenkörper gewickelt bzw. als gemeinsame Luftspule ausgelegt, ist erfindungsgemäß vorgesehen, dass die stromdurchflossenen Leiter der Primärspulen einer Primärspuleneinheit jeweils abwechselnd gewickelt sind und stets die gleiche Reihenfolge in ihren Wicklungen zueinander aufweisen. Betrachtet man einen einfachen Fall, bei der eine Primärspuleneinheit aus zwei Primärspulen besteht, kann dies bedeuten, dass die erste Wicklung zur ersten Primärspule gehört, die zweite Wicklung zur zweiten Primärspule, die dritte wiederum zur ersten Primärspule und die vierte Wicklung dann zur zweiten Primärspule usw. Um eine Gleichheit des gemessenen Signals an allen Sekundärspulen einer Sekundärspuleneinheit zu ermöglichen, können die Sekundärspulen jeder Sekundärspuleneinheit ebenfalls abwechselnd gewickelt sein und die gleiche Reihenfolge in ihren Wicklungen zueinander aufweisen. Durch ein Vermeiden von Alternationen bzw. Permutationen der Stromleiter zueinander sind die Sekundärspannungssignale dann im Wesentlichen gleichartig.

Wünschenswerterweise sollte der Platz, der für die Spulen benötigt wird und in bisherigen Aufbauten zur Verfügung steht und vorgesehen ist, nicht erhöht werden. Daher bietet es sich an die einzelnen Primärspulen bzw. Sekundärspulen parallel zu wickeln. Durch den geringen Abstand der in der Regel drahtartigen Messleiterkönnen die unterschiedlichen Spulen einer Spuleneinheit als identisch angesehen werden. Bei Materialgleichheit und gleichartiger Spannungsversorgung sind somit Temperatur, Induktivität, thermische und elektrische Leitfähigkeit im Wesentlichen gleich. Dies bedeutet, dass die Primärspulen im Wesentlichen das gleiche Magnetfeld erzeugen und, dass an den Sekundärspulen im Wesentlichen das gleiche Spannungssignal erzeugt wird. Somit sind zum einen die Magnetfelderzeugung und zum anderen die Messung möglichst redundant ausgeführt. Zudem ist eine platzsparende Vorrichtung möglich.

Wünschenswerterweise lässt sich diese redundante Steuerstabsmessung in neuartigen Kraftwerken, wie dem European Pressurized Reactor (EPR) einzusetzen, die einen vom Sicherheitsaspekt her besonderen Aufbau besitzen. So ist es denkbar und oftmals geübte Praxis, einzelne Teile des Kraftwerks in redundanter Weise, beispielsweise sternförmig um den Reaktordruckbehälter anzuordnen. Bei Ausfall oder speziell auch der Wartung eines Bauteils können die weiterhin funktionstüchtigen Bauteile in diesem Fall die Funktion des ausgefallenen Bauteils übernehmen. Da oftmals eine vierfache Redundanz von einzelnen Bauteilen vorhanden ist, die dann beispielsweise kreuzförmig um den Reaktordruckbehälter angeordnet sein können. Auf Grund dieses gebräuchlichen Aufbaus des Kernkraftwerks bietet es sich daher vorteilhafterweise an, dass jede Primärspuleneinheit aus vier Primärspulen und jede Sekundärspuleneinheit aus vier Sekundärspulen besteht. Zwar sind die Spulen weiterhin gemeinsam am Reaktordruckbehälter im Containment angeordnet, allerdings können in diesem Fall Primärspulenstromversorgungseinheiten für die Primärspulen an räumlich getrennten Orten angeordnet werden. Ebenfalls räumlich getrennt werden kann somit auch die Positionsbestimmung, die somit vierfach redundant wäre und jeweils durch eines der an den vier Sekundärspulen induzierten Wechselspannungssignale erfolgte. Gerade im Hinblick auf die Sicherheit kann somit auch bei Wartungsarbeiten, bei Unfällen oder auch Sabotageakten, die zu Ausfällen von Teilbereichen, wie zum Beispiel Gebäudeteilen führen, weiterhin die Steuerstabsposition bestimmt werden.

Vorteilhafterweise besitzt jede Primärspule eine eigene Primärspulenstromversorgungseinheit. Bei einem Ausfall einer Primärspule bzw. einer Primärspulenstromversorgungseinheit wird somit weiterhin ein magnetisches Feld aufgebaut, so dass weiterhin die Steuerstabspositionsermittlung möglich ist. Durch eine denkbare räumliche Trennung der Primärspulenstromversorgungseinheiten kann dann auch bei Unfällen die Steuerstabsposition ermittelt werden.

Vorteilhafterweise ist im Betriebsfall die elektrische Stromstärke an jeder Primärspule einer Primärspuleneinheit im Wesentlichen gleich groß. Bei von Material und Form gleichartigen Spulen bedeutet dies, dass das Magnetfeld, welches durch jede Primärspulen erzeugt wird, im Wesentlichen gleich groß ist. Aus der Superposition der einzelnen Magnetfelder ergibt sich das Gesamtmagnetfeld. Bei Ausfall einer Primärspule einer Primärspuleneinheit, verringert sich die gesamte Wechselspannung, welche gleich der Superposition der einzelnen Wechselspannungen der Primärspulen ist, um den entsprechenden Anteil. Somit reduziert sich auch das magnetische Wechselfeld. Sind beispielhaft vier Primärspulen in einer Primärspuleneinheit vorhanden und fällt eine dieser Primärspulen aus, so bedeutet dies, eine Reduktion des Stroms von 100% auf ungefähr 75%, die gleichbedeutend mit einer entsprechenden Veränderung des Magnetfelds ist.

Vorteilhafterweise ist im Betriebsfall die Phase eines an jeder Primärspule einer Primärspuleneinheit vorhandenen Wechselstroms im Wesentlichen gleich. Bei gleichen Phasen addieren sich die einzelnen magnetischen Wechselfelder zu einem größeren Gesamtfeld. Im Umkehrschluss bedeutet dies, dass sich die Wechselfelder bei unterschiedlichen Phasen teilweise oder gänzlich auslöschen. Um ein möglichst großes magnetisches Wechselfeld zu erzeugen und somit möglichst große Sekundärspannungssignale zu erzeugen, bietet es sich daher an, gleiche Phasen für die Wechselspannung der Primärspulen zu verwenden.

Wünschenswerterweise werden die Wechselspannungen bzw. Wechselströme der Primärspulen überwacht. Dies kann durch eine Primärstromüberwachungs- und regelungseinheit geschehen. Diese sorgt vorteilhafterweise neben der Überwachung dafür, dass die Summe der Stromstärken der Primärspulen in jeder Primärspuleneinheit im Wesentlichen konstant ist. Bei Ausfall einer Primärspule würde sichwie oben beschrieben zunächst das magnetische Wechselfeld und somit das induzierte Wechselspannungssignal an den Sekundärspulen reduzieren. Durch Überwachung der einzelnen Wechselströme an den Primärspulen einer Primärspuleneinheit wird dies registriert, so dass die verbleibenden Einzelströme und somit der Gesamtstrom nachreguliert werden kann und dadurch das magnetische Wechselfeld seine ursprüngliche Größe wieder erhält. Dies ist sinnvoll, da bei Ausfall einer Primärspule das magnetische Wechselfeld reduziert wird und somit auch das Spannungssignal an den Sekundärspulen. Durch die Reduktion des Spannungssignals an den Sekundärspulen würde dem Benutzer bzw. dem System ohne eine solche Überwachungs- und Regelungseinheit unter Umständen aber eine falsche Steuerstabsposition vorgespielt werden. Sind beispielsweise vier Primärspulen in einer Primärspuleneinheit vorhanden, so sollte bei Ausfall einer Primärspule der Strom der verbliebenen Primärspulen jeweils um 1/3 erhöht werden, so dass die Gesamtheit der Wechselströme konstant bleibt und das Gesamtmagnetfeld den Ausgangswert einnimmt.

Die mit der Erfindung erzielten Vorteile bestehen insbesondere darin, dass durch die Kombination von einzelnen Primärspulen zu Primärspuleneinheiten und/oder Sekundärspulen zu Sekundärspuleneinheiten eine vollständige Redundanz des Messsystems erreicht wird. Trotz Ausfall oder Wartung einzelner Baugruppen ist weiterhin eine Positionsbestimmung der Steuerstäbe möglich, so dass weiterhin die Leistungssteuerung im Reaktor vorgenommen werden kann. Durch die gemeinsame Wicklung der Primärspulen zu einem Primärspulenkörper bzw. der Sekundärspulen zu einem Sekundärspulenkörper wird einerseits erreicht, dass der notwendige Platz der Messspulen nicht erhöht werden muss. Andererseits liefert jede Primärspule einer Primärspuleneinheit den gleichen Beitrag zu dem magnetischen Wechselfeld so dass ein Ausfall einzelner Primärspulen durch Erhöhung des Stroms der einzelnen Primärspulen kompensiert werden kann. Zudem wird an jeder Sekundärspule einer Sekundärspuleneinheit im Wesentlichen das gleiche Wechelspannungssignal induziert. Durch näherungsweise Gleichartigkeit der einzelnen Primärspulen und der einzelnen Sekundärspulen wird eine vollständige Wiederholung der Magnetfelderzeugung und der Positionsmessung erreicht, welches dem Sicherheitsgedanken in modernen Kernkraftwerken Rechnung trägt.

Ein Ausführungsbeispiel der Erfindung wird anhand mehrerer Zeichnungen erläutert. Darin zeigen:

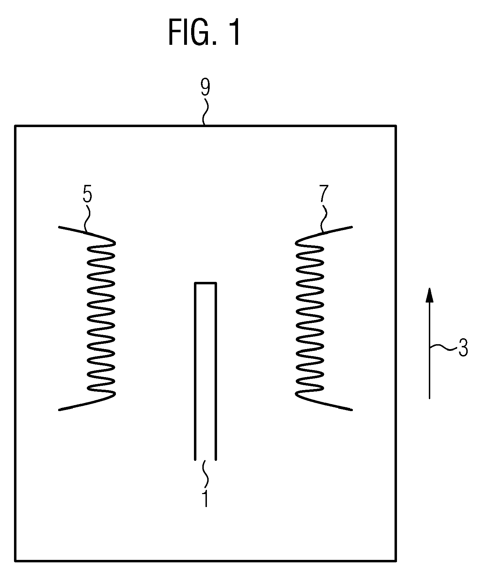

- FIG. 1: ein bisheriges Meßsystem zur Steuerstabspositionsermittlung bestehend aus Primär- und Sekundärspulen,
- FIG. 2: eine erfindungsgemäße Primärspuleneinheit bestehend aus vier Primärspulen,
- FIG. 3: eine Primär- und Sekundärspulenanordnung einer erfindungsgemäßen Ausführung, bei der die Spuleneinheiten nebeneinander angeordnet sind und jeweils aus vier Primär- bzw. Sekundärspulen bestehen,
- FIG. 4: ein Primärspulenstromüberwachungssystem in einer ersten Ausführungsvariante, und
- FIG. 5: ein Primärspulenstromüberwachungssystem in einer zweiten Ausführungsvariante.

Gleiche Teile sind in allen Figuren mit denselben Bezugszeichen versehen.

FIG: 1 zeigt schematisch ein übliches Meßsystem zur Steuerstabspositionsermittlung. Dieses besteht aus jeweils einer entlang des Verschiebewegs des Steuerstabs 1, welcher durch den Pfeil 3 gekennzeichnet ist, angeordneten Primärspule 5 und Sekundärspule 7. Sowohl Primärspule 5 als auch Sekundärspule 7 befinden sich innerhalb des Containments 9 eines Kernkraftwerks. Beim Verfahren bzw. Verschieben des Steuerstabs 1 ändert sich das Wechselspannungssignal an der Sekundärspule 7, welches von dem an der Primärspule5 anliegenden Wechselspannungssignal induziert wird, in Abhängigkeit von der Position des Steuerstabs 1, so dass die Position des Steuerstabs 1 ermittelt werden kann.

Bei einem Defekt der Primärspule 5 bzw. einem Ausfall oder einer Störung des Stromflusses in dieser Spule ändert sich das magnetische Wechselfeld unkontrolliert, so dass das an der Sekundärspule 7 induzierte Wechselspannungssignal nicht mehr verlässlich die Position des Steuerstabs 1 widerspiegelt. Ebenfalls bewirkt ein Ausfall der Sekundärspule 7 bzw. ein Defekt von Bauteilen, die der Sekundärspule 7 zugeordnet sind, eine falsche Anzeige der Position des Steuerstabs 1.

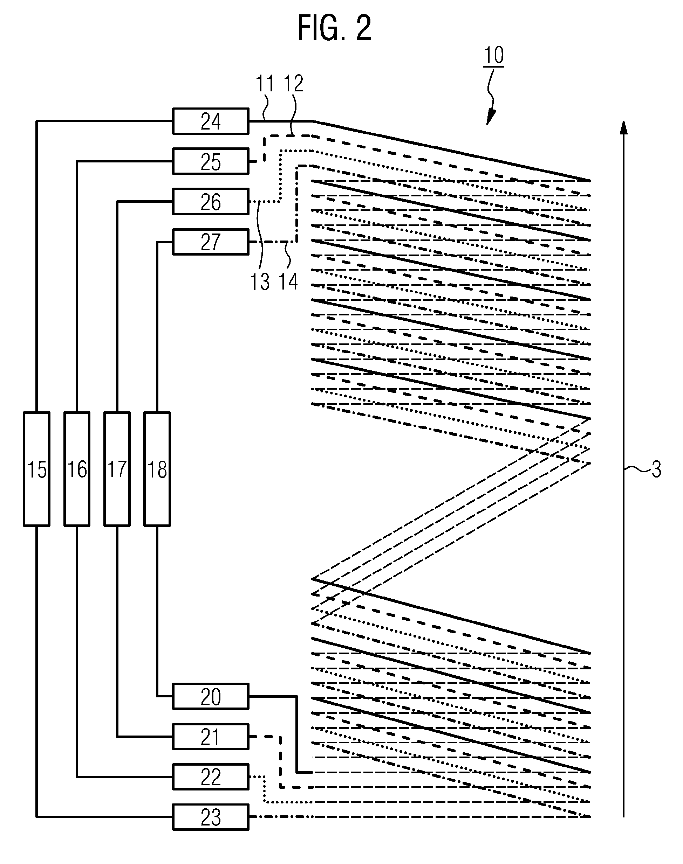

FIG. 2 zeigt als Ausschnitt eines Meßsystems eine erfindungsgemäße Primärspuleneinheit10. Der Steuerstab 1 ist hier nicht dargestellt, kann aber ebenfalls in Richtung des Pfeils 3 verfahren werden und zwar entweder entlang der Primärspuleneinheit 10 oder durch diese hindurch. In diesem Ausführungsbeispiel besteht die Primärspuleneinheit 10 aus vier gemeinsam gewickelten Spulen 11-14, wobei die einzelnen Primärspulen 11-14 als Luftspulen ausgeführt sind und jeweils abwechselnd einlagig gewickelt sind, hier in einer Seitenansicht dargestellt. Durch die abwechselnde Wicklung sind die einzelnen Windungen möglichst homogen über den gesamten Primärspulenkörper verteilt. Ferner weist jede Primärspule 11-14 im Wesentlichen einerseits die gleiche Zahl an Windungen auf und weist andererseits im Wesentlichen den gleichen Spulenanfang und das gleiche Spulenende auf. Die einzelnen Primärspulen 11-14 sind jeweils an eine Primärspulenstromversorgungseinheit 15-18, welche die Primärspulen 11-14 mit einer Wechselspannung versorgt, über Kontaktstellen 20-27 angeschlossen. Fährt ein Steuerstab 1, der einen induktionsbeeinflussenden Bereich aufweisen kann, in Richtung des Pfeils 3 an der Primärspuleneinheit10 entlang oder durch die durch die Primärspulen 11-14 gebildete Luftspule hindurch, so ändert sich ein induziertes Wechelspannungssignal an in dieser Figur nicht dargestellten Sekundärspulen in Abhängigkeit der Steuerstabsposition.

Auf Grund der Gleichartigkeit der Primärspulen 11-14im Hinblick auf Aufbau, Geometrie, Temperatur, Induktivität, thermische und elektrische Leitfähigkeit etc. sowie deren homogener Verteilung entlang der Steuerstabsverschieberichtung ist das durch die Wechselspannung induzierte Magnetfeld jeder einzelnen Primärspule 11-14bei Beaufschlagung mit der gleichen Spannung im Wesentlichen gleichartig. Die Einzelfelder addieren sich bei der Überlagerung, sofern die Wechselspannungen im Wesentlichen gleiche Phasen aufweisen, was durch geeignete Ausbildung und Ankopplung der - vorteilhafterweise voneinander unabhängigen, separaten - Stromversorgungseinheiten sichergestellt wird. Insbesondere durch die vierfach-redundante Ausgestaltung der Primärspuleneinheit 10 kann auch bei Wegfallen eines oder mehrerer Wechselspannungssignale weiterhin ein Magnetfeld erzeugt werden, wodurch die zuverlässige und ausfallfreie Positionsbestimmung des Steuerstabs 1 ermöglicht wird.

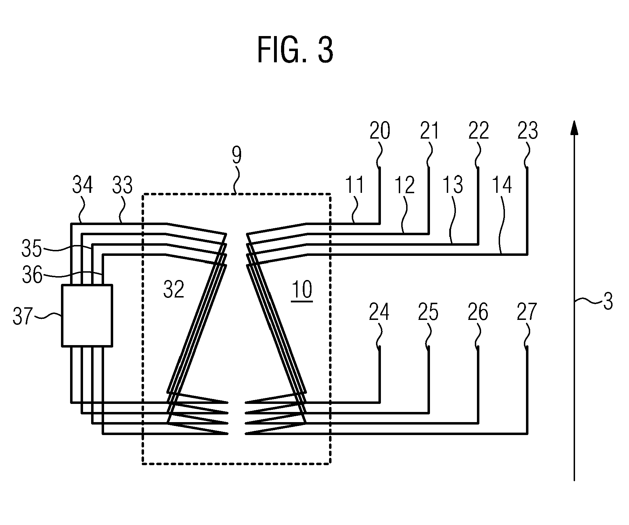

FIG. 3 zeigt eine Primär- und Sekundärspulenanordnung einer erfindungsgemäßen Ausführung, bei der die Spuleneinheiten nebeneinander angeordnet sind und jeweils aus vier Primärspulen 11-14 bzw. Sekundärspulen bestehen. In einem Containment 9 sind neben anderen Bauteilen sowohl die Primärspulen 11-14 in einer Primärspuleneinheit 10 als auch die Sekundärspuleneinheit 32, die ihrerseits aus vier Sekundärspulen 33-36 besteht, in Verschieberichtung des hier nicht dargestellten Steuerstabs 1, die der Richtung des Pfeils 3entspricht, nebeneinander angeordnet. Denkbar und ebenfalls gebräuchlich ist auch eine konzentrische Anordnung, bei der eine Spuleneinheit ringförmig um den Steuerstab 1 angeordnet ist und die andere Spuleneinheit ebenfalls ringförmig um die erstgenannte Spuleneinheit.

Die Primärspulen sind über die Kontaktstellen 20-27 an die hier nicht dargestellten Primärspulenstromversorgungseinheiten angeschlossen. Die vier Sekundärspulen 33-36 sind ebenso wie die Primärspulen 11-14 gemeinsam einlagig und abwechselnd gewickelt, so dass jede der Sekundärspulen 33-36 im Wesentlichen mit dem gleichen Magnetfeld induziert wird und ein im Wesentlichen gleiches Wechelspannungssignal erfährt. Die Überwachung der Wechselspannungssignale an den Sekundärspulen 33-36 geschieht außerhalb des Containments 30 in einer Spannungsmesseinheit 37 für jede Sekundärspule 33-36 separat. Dies bedeutet einerseits, dass die Position des Steuerstabs 1 vierfach redundant gemessen wird, und andererseits dass die Wechselspannungssignale an den Sekundärspulen 33-36 nicht unbedingt wie hier dargestellt in einer gemeinsamen Spannungsmesseinheit 37 gemessen werden müssen. Vielmehr können auch vier separate Spannungsmesseinheiten verwendet werden, welche dann auch räumlich voneinander getrennt werden und bevorzugt außerhalb des Containments angeordnet werden können, so dass dem Sicherheitsgedanken verstärkt Rechnung getragen wird.

Fährt der Steuerstab 1 in Richtung des Pfeils3 an der Primär- und Sekundärspuleneinheit entlang oder durch diese hindurch, so wird durch die vier Primärspulen 11-14 jeweils ein in Wesentlichen gleiches Magnetfeld erzeugt, welches ein in Wesentlichen gleiches Wechselspannungssignal an den Sekundärspulen induziert, und zwar in Abhängigkeit von der Steuerstabsposition. Durch die Gleichartigkeit der Primärspulen 11-14 sowie der dort angelegten Wechselspannungen addieren sich die einzelnen Magnetfelder zu einem Gesamt-Magnetfeld, welches ungefähr dem vierfachen eines einzelnen Magnetfelds entspricht, so dass jede Sekundärspule 33-36 durch das Gesamt-Magnetfeld beeinflusst wird.

Einen Ausfall einer Sekundärspule 33-36 kann die Spannungsmesseinheit 37 einerseits durch Vergleich der einzelnen Wechselspannungssignale der Sekundärspulen 33-36 und/oder andererseits durch Vergleich mit historischen Werten erkennen. So weist eine plötzliche, große Änderung eines Wechselspannungssignals bei gleichzeitig keiner oder nur geringer Bewegung des Steuerstabs 1 auf einen zumindest teilweisen Systemausfall hin. Ebenfalls denkbar ist auch ein Ausfall einer oder mehrerer Primärspulen 11-14, wodurch die Spannungsmesseinheit 37 eine plötzliche Änderung eines jeden Wechselspannungssignals der Sekundärspulen 33-36 registrieren würde.

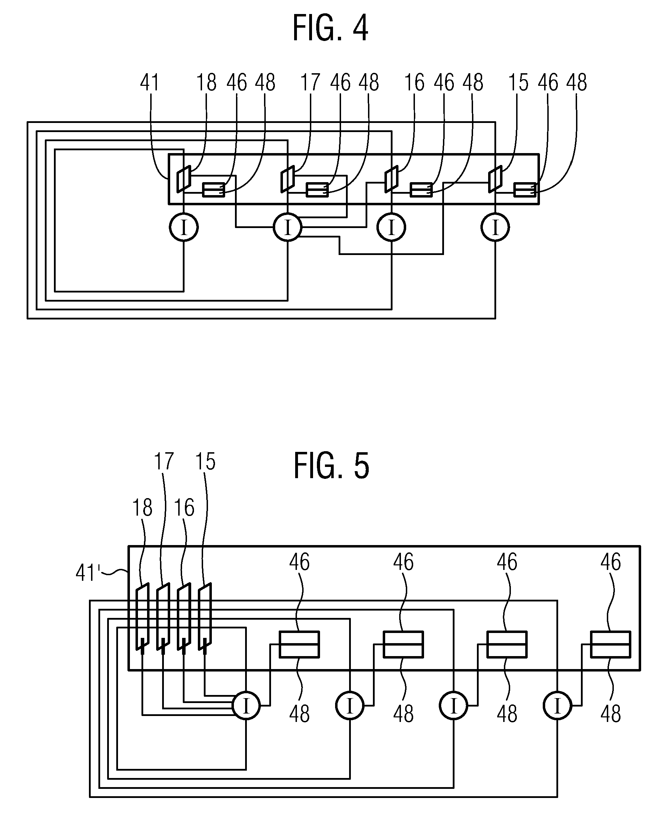

In FIG. 4 und 5 sind beispielhafte Primärspulenstromüberwachungssysteme oder kurz Primärspulenüberwachungssysteme 41, 41' dargestellt. In beiden Figuren wird der durch einen Leiter fließende Strom jeweils an Strommesseinheiten I gemessen. In beiden Figuren wird an Primärstromversorgungseinheiten 15-18, die den nicht explizit dargestellten Primärspulen 1-4 zugeordnet sind, der Primärstrom abgegriffen und gemessen, wobei die Stromversorgung für jede Primärspule 11-14 unabhängig voneinander realisiert ist. In FIG. 4 geschieht dies für jeden der Versorgungsdrähte der Primärspulen einzeln. In FIG. 5 geschieht dies mit Hilfe eines Ferritkerns und einem magnetischen Sensor, wobei der Gesamtstrom vierfach redundant gemessen wird.

Um zu vermeiden, dass bei Ausfall einer Primärspule oder einer dieser zugeordneten Baugruppe eine falsche Steuerstabsposition oder eine vermeintliche, tatsächlich nicht vorhandene Änderung der Position angezeigt wird, wird der Strom permanent oder in Abständen, insbesondere zeitlich periodisch, von einer oder mehrerer Primärspulenüberwachungseinheit 46, die dem Primärspulenüberwachungssystem 41, 41' zugeordnet ist, überwacht, als Istwert registriert und mit dem vorgegebenen Strom als Sollwert verglichen. Bei einer Diskrepanz zwischen Ist- und Sollwert kann einerseits eine Fehlermeldung angezeigt und andererseits der Strom der Primärspulen mit Hilfe einer Regelungseinheit 48, die ebenfalls dem Primärspulenüberwachungssystem41, 41' zugeordnet ist, erhöht werden, so dass der Gesamtstrom und damit das durch Superposition der Einzelmagnetfelder gebildete Gesamtmagnetfeld wieder den Sollwert erreichen. Dies geschieht über die einzelnen Primärstromversorgungseinheiten 15-18.

In FIG. 4 werden dabei die Einzelströme in jeder Strommesseinheit I gemessen und hieraus der Gesamtstrom bestimmt. So kann in FIG. 4 die Messung der Stromstärke durch Spannungsabfall an einem Widerstand in der Primärstromüberwachungseinheit 46 gemessen werden. In FIG. 5 wird dagegen der Gesamtstrom von jeder Primärstromüberwachungseinheit 46 gemessen, so dass eine vierfache Redundanz der Messung des Gesamtstroms geschieht.

Fällt eine der vier Primärspulen 11-14 bzw. eine der Baugruppe, die den Primärspulen zugeordnet sind, aus, so würde der Strom an den verbleibenden drei Primärspulen 11-14 jeweils um ca. 33,3% erhöht werden. Bei einem Ausfall von zwei der vier Primärspulen 11-14 müsste der Strom an jeder Primärspule 11-14 verdoppelt werden, um das gleiche Magnetfeld zu induzieren.

Durch die vorliegend offenbarte Messvorrichtung zur Positionsmessung wird erreicht, dass einerseits die Position des Steuerstabs 1 ähnlich genau wie in herkömmlichen Messvorrichtungen bestimmt wird und zusätzlich durch die erzielte Redundanz dem Sicherheitsgedanken verstärkt Rechnung getragen wird.

### Bezugszeichenliste

- 1: Steuerstab
- 3: Pfeil
- 5: Primärspule
- 7: Sekundärspule
- 9: Containment
- 10: Primärspuleneinheit
- 11-14: Primärspule
- 15-18: Primärspulenstromversorgungseinheit
- 20-27: Kontaktstelle
- 32: Sekundärspuleneinheit
- 33-36: Sekundärspule
- 37: Spannungsmesseinheit
- 41: Primärspulenstromüberwachungssystem
- 41': Primärspulenstromüberwachungssystem
- 46: Primärstromüberwachungseinheit
- 48: Regelungseinheit
- I: Strommesseinheit

## Patentansprüche

1. Messvorrichtung zur Positionsmessung eines verschiebbaren Steuerstabs (1) in einem Kernreaktor
mit zumindest einer, entlang eines Verschiebewegs des Steuerstabs (1) angeordneten, induktiv durch zumindest eine Primärspuleneinheit (10) erregten Sekundärspuleneinheit (32),
wobei zumindest eine Primärspuleneinheit (10) aus mindestens zwei Primärspulen (11-14) besteht,
wobei alle Primärspulen (11-14) der Primärspuleneinheit (10) gemeinsam um einen Spulenkörper oder gemeinsam als Luftspule gewickelt sind,
**dadurch gekennzeichnet, dass**
alle Primärspulen (11-14) der Primärspuleneinheit (10) jeweils abwechselnd gewickelt sind und stets die gleiche Reihenfolge in ihren Wicklungen zueinander aufweisen, und dass
die Primärspulen (11-14) der Primärspuleneinheit (10) in Richtung des Verschiebewegs im Wesentlichen jeweils den gleichen Spulenanfang und das gleiche Spulenende aufweisen.

2. Messvorrichtung nach Anspruch 1, **dadurch gekennzeichnet, dass** alle Primärspulen (11-14) einer Primärspuleneinheit (10) im Wesentlichen die gleiche Zahl an Wicklungen aufweisen.

3. Messvorrichtung nach einem der Ansprüche 1 bis 2, **dadurch gekennzeichnet, dass** alle Primärspulen (11-14) und/oder Sekundärspulen (33-36) einlagig gewickelt sind.

4. Messvorrichtung nach einem der Ansprüche 1 bis 3, **dadurch gekennzeichnet, dass** jede Primärspuleneinheit (10) aus vier Primärspulen (11-14) und jede Sekundärspuleneinheit (32) aus vier Sekundärspulen (33-36) besteht.

5. Messvorrichtung nach einem der Ansprüche 1 bis 4, **dadurch gekennzeichnet, dass** jede Primärspule (11-14) eine eigene Primärspulenstromversorgungseinheit (15-18) aufweist.

6. Messvorrichtung nach einem der Ansprüche1 bis 5, **dadurch gekennzeichnet, dass** die Primärspulenstromversorungseinheiten (15-18) derart ausgelegt sind, dass im Betriebsfall die elektrische Stromstärke an jeder Primärspule (11-14) einer Primärspuleneinheit (10) im Wesentlichen die gleiche Größe aufweist.

7. Messvorrichtung nach einem der Ansprüche 1 bis 6, **dadurch gekennzeichnet, dass** die Primärspulenstromversorungseinheiten (15-18) derart ausgelegt sind, dass im Betriebsfall die Phase eines an jeder Primärspule (11-14) einer Primärspuleneinheit (10) vorhandenen Wechselstroms im Wesentlichen gleich ist.

8. Messvorrichtung nach einem der Ansprüche 1 bis 7, **dadurch gekennzeichnet, dass** eine Primärstromüberwachungseinheit (46) und Regelungseinheit (48) vorgesehen ist, welche die Summe der Stromstärken der Primärspulen (11-14) in jeder Primärspuleneinheit (10) im Wesentlichen konstant hält.

## Claims

1. Measuring device for measuring the position of a movable control rod (1) in a nuclear reactor,
comprising at least one secondary coil unit (32) which is arranged along a movement path of the control rod (1) and is inductively excited by at least one primary coil unit (10),
at least one primary coil unit (10) consisting of at least two primary coils (11-14),
all the primary coils (11-14) of the primary coil unit (10) being jointly wound around a coil body or jointly wound as an air-core coil,
**characterised in that**
all the primary coils (11-14) of the primary coil unit (10) are alternately wound and their windings are always in the same order in relation to one another, and **in that**
the primary coils (11-14) of the primary coil unit (10) each have, in the direction of the movement path, substantially the same coil beginning and the same coil end.

2. Measuring device according to claim 1, **characterised in that** all the primary coils (11-14) of a primary coil unit (10) have substantially the same number of windings.

3. Measuring device according to any of claims 1 and 2, **characterised in that** all the primary coils (11-14) and/or secondary coils (33-36) are wound in a single layer.

4. Measuring device according to any of claims 1 to 3, **characterised in that** each primary coil unit (10) consists of four primary coils (11-14) and each secondary coil unit (32) consists of four secondary coils (33-36).

5. Measuring device according to any of claims 1 to 4, **characterised in that** each primary coil (11-14) has its own primary coil current supply unit (15-18).

6. Measuring device according to any of claims 1 to 5, **characterised in that** the primary-coil current-supply units (15-18) are designed such that, in operation, the electrical current strength at each primary coil (11-14) of a primary coil unit (10) is substantially the same.

7. Measuring device according to any of claims 1 to 6, **characterised in that** the primary-coil current-supply units (15-18) are designed such that, in operation, the phase of an alternating current present at each primary coil (11-14) of a primary coil unit (10) is substantially the same.

8. Measuring device according to any of claims 1 to 7, **characterised in that** a primary current monitoring unit (46) and regulating unit (48) are provided which keep the sum of the current strengths of the primary coils (11-14) in each primary coil unit (10) substantially constant.

## Revendications

1. Dispositif de mesure destiné à la mesure de position d'une barre de contrôle (1) déplaçable dans un réacteur nucléaire,
avec au moins une unité de bobines secondaires (32) disposée le long d'une course de déplacement de la barre de contrôle (1) et excitée par induction par au moins une unité de bobines primaires (10),
dans lequel au moins une unité de bobines primaires (10) se compose d'au moins deux bobines primaires (11-14),
dans lequel toutes les bobines primaires (11-14) de l'unité de bobines primaires (10) sont enroulées conjointement autour d'un corps de bobine ou conjointement en tant que bobine à air,
**caractérisé en ce que**
toutes les bobines primaires (11-14) de l'unité de bobines primaires (10) sont enroulées respectivement de façon alternée et présentent constamment le même ordre dans leurs enroulements les unes par rapport aux autres, et **en ce que**
les bobines primaires (11-14) de l'unité de bobines primaires (10) présentent en direction de la course de déplacement essentiellement respectivement le même début de bobine et la même fin de bobine.

2. Dispositif de mesure selon la revendication 1, **caractérisé en ce que** toutes les bobines primaires (11-14) d'une unité de bobines primaires (10) présentent essentiellement le même nombre d'enroulements.

3. Dispositif de mesure selon l'une des revendications 1 à 2, **caractérisé en ce que** toutes les bobines primaires (11-14) et/ou bobines secondaires (33-36) sont enroulées en une seule couche.

4. Dispositif de mesure selon l'une des revendications 1 à 3, **caractérisé en ce que** chaque unité de bobines primaires (10) se compose de quatre bobines primaires (11-14) et chaque unité de bobines secondaires (32) se compose de quatre bobines secondaires (33-36).

5. Dispositif de mesure selon l'une des revendications 1 à 4, **caractérisé en ce que** chaque bobine primaire (11-14) présente une propre unité d'alimentation électrique de bobines primaires (15-18).

6. Dispositif de mesure selon l'une des revendications 1 à 5, **caractérisé en ce que** les unités d'alimentation électrique de bobines primaires (15-18) sont conçues de telle sorte que, en fonctionnement, l'intensité électrique sur chaque bobine primaire (11-14) d'une unité de bobines primaires (10) présente essentiellement la même grandeur.

7. Dispositif de mesure selon l'une des revendications 1 à 6, **caractérisé en ce que** les unités d'alimentation électrique de bobines primaires (15-18) sont conçues de telle sorte que, en fonctionnement, la phase d'un courant alternatif présent sur chaque bobine primaire (11-14) d'une unité de bobines primaires (10) est essentiellement identique.

8. Dispositif de mesure selon l'une des revendications 1 à 7, **caractérisé en ce qu'**une unité de surveillance du courant primaire (46) et une unité de régulation (48) sont prévues qui maintiennent essentiellement constante la somme des intensités électriques des bobines primaires (11-14) dans chaque unité de bobines primaires (10).
